# EUROPEAN PATENT SPECIFICATION

(11) **EP 3 269 541 B1**
(45) Date of publication and mention of the grant of the patent: **17.08.2022**
(21) Application number: 17179717.8
(22) Date of filing: 05.07.2017
(51) Int. Cl.: B32B 5/02, B32B 5/26, B32B 5/16, B32B 5/30, B32B 17/00, B29C 70/42, B32B 17/06, B29C 70/00, B29C 70/08, B32B 38/08

(54) **PROCESS FOR MANUFACTURING FIREPROOF RIGID PRODUCTS**
VERFAHREN ZUR HERSTELLUNG FEUERFESTER STARRER PRODUKTE
PROCÉDÉ DE FABRICATION DE PRODUITS RIGIDES IGNIFUGES

(30) Priority: 08.07.2016 IT 201600071279
(43) Date of publication of application: 17.01.2018
(73) Proprietor: Microtex Composites S.r.l., 51100 Pistoia (IT)
(72) Inventor: Becagli, Massimiliano, 50012 Bagno a Ripoli (FI) (IT); Becagli, Federico, 50012 Bagno a Ripoli (FI) (IT); Campigli, Silvio, 50053 Empoli (IT)
(74) Representative: Nesti, Antonio

(56) References cited:
- AU-A1- 2014 367 640
- JP-A- H06 126 902
- US-A- 4 550 051
- US-A- 5 368 921
- US-A1- 2003 104 738
- US-A1- 2010 304 145
- US-A1- 2015 115 506

## Description

### Field of the Invention

The invention relates to a process to obtain decorative elements from "classic" fabrics, being rigid and, at the same time, heat-resistant.

### State of the art

As is known, fabrics are characterized by a lack of rigid structure and, vice versa, by a sharp drapability, which has allowed the application of this product to a wide variety of sectors, such as clothing, furnishings and other areas which are more or less related to the just mentioned ones. More specifically, most areas of application presuppose flexibility as the essential requirement for the use of this product. The aforementioned clothing and furniture items belong to these areas.

Giving this product the ability to adapt to a preform which is put into contact with it and, once the product is subjected to physical action (e.g. heat or UV radiation), allows to obtain light and resistant products at the same time.

From patent application FI2013A000158 a process for manufacturing rigid products from fabrics is known, which faces the technical aim of producing rigid elements, i.e. with structural features, based on decorative aesthetic fabrics.

It is also known that many applications of composite materials, especially in the transport sector, are subject to various requirements, including the manufacture of products with fire-resistance properties in terms of: flame propagation resistance, smoke transparency, smoke toxicity, heat release rate.

For example, in aeronautics, what is required for this parameter, for applications such as ceiling panels, wall panels, partitions, wide cabins walls, nut panels, storage compartments, class dividers, passenger service units, is that the total positive heat released In the first two minutes must not exceed 65 KW min/m2 and that the maximum heat release rate during a 5-minute test should not exceed 65 KW/m2.

As is known, the individual materials forming the composites are called constituents, and according to their function they are called matrix and reinforcement (or charge). These two parts combined together are a product capable of guaranteeing high mechanical properties (to this purpose, the care of the interfacial adhesion between reinforcement and matrix is crucial) and a very low bulk density: for this reason, composites are widely used in applications where lightness is crucial, as in the transport sector.

The conformation of the finished and/or semi-finished product is generally achieved through two different techniques.

A first technique involves the use of a mould (aluminium or fibres bonded to a matrix, which is often thermosetting).

A second technique involves the use of a mould formed by a matrix and a counter-matrix, both movable, e.g. by a hydraulic press. This mould deforms the product three-dimensionally, and obtains an element of thin thickness and complex shape.

From JP H06 126902 A it is known a process for manufacturing rigid heat-resistant products in form of composite material comprising at least three layers, with a cloth layer comprising one or more flame-retardant fibers on both outer layer, and a cloth layer comprising polyolefin fibers laminated on the inner layer. The three layers are integrally molded with a thermosetting epoxy resin. But this resin does not guarantee the transparence on the surface of the first cloth layer.

US 5,368,921 A, US 2015/115506 A1, AU 2014367640 A1, US 2010/304145 A1, US 2003/104738 A1 and US 4,550,051 A describe further laminate products.

### Object of the invention

At present, therefore, there is a need to have "aesthetic" products, i.e. featuring decorative qualities given by textile products, simultaneously being rigid and having structural properties, and being capable of meeting technical requirements in terms of flame propagation resistance, smoke transparency, smoke toxicity, heat release rate.

The object of the present invention is to provide a resistant product, in particular against delamination in presence of a flame, and which is capable of meeting the fire-resistance requirements of composite materials, in particular the energy release rate.

### Summary of the Invention

These objects have been achieved by the method defined by claim 1 and the product defined by claim 7. Further embodiments of the invention are defined by dependent claims 2-6.

The achieved advantages essentially consist of the fact that the obtained laminate simultaneously features aesthetic characteristics, structural stiffness and flame retarding abilities.

A further advantage is that the lowering of the peak during heat release is due both to thermal properties of the glass layer and to the fact that the coupled fibreglass layer, stressed by the heat source, tends to detach from the textile fibre fabric, forming an air cushion between the fibreglass and textile fibre layer, thus limiting the passage of heat and, consequently, the heat release rate.

Another advantage is that the layer of fibreglass can be impregnated and processed as a single layer together with the aesthetic textile fibre fabric. Another advantage is that the layer of fibreglass, not being a film, can release with more ease any internal air bubbles during the care cycle.

### List of drawings

Other features and advantages of the process according to the present invention will become more apparent from the following description and the accompanying drawings, wherein:

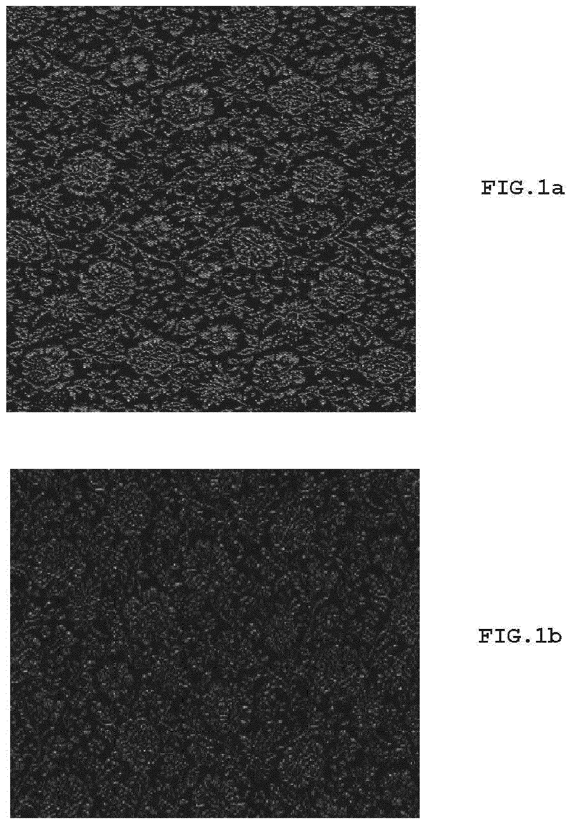

- Figures 1a and 1b show the aspect of a laminate according to the invention formed from a lurex textile fabric, respectively before and after the impregnation treatment;

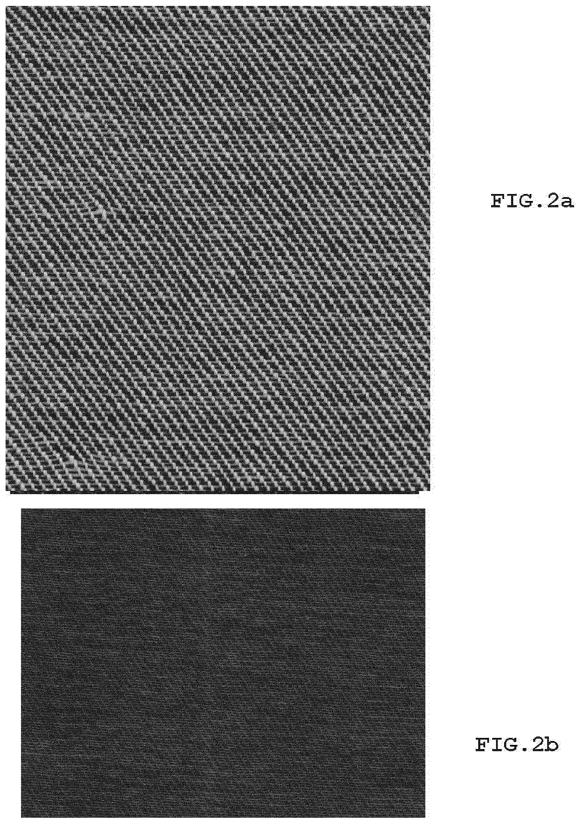

- Figures 2a, 2b show the aspect of a laminate according to the invention formed from a denim textile fabric, respectively before and after the impregnation treatment;

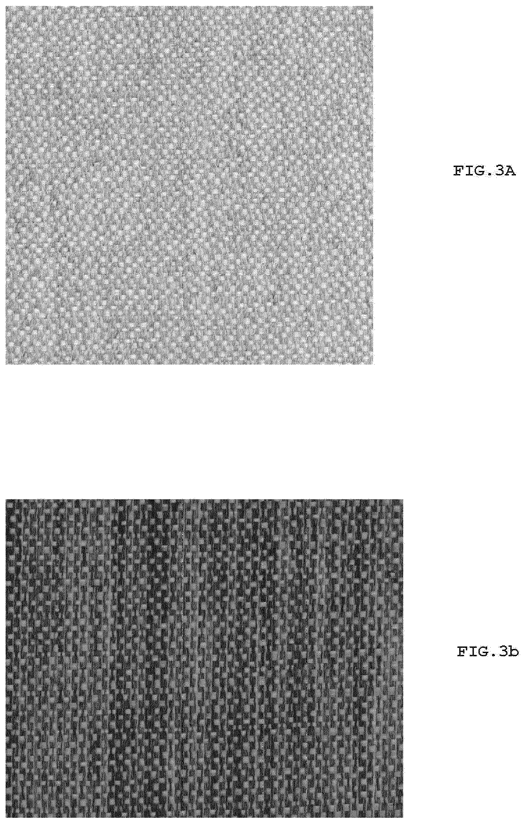

- Figures 3a, 3b show respectively the aspect of a laminate according to the invention formed from a linen textile fabric, respectively before and after the impregnation treatment.

### Detailed description

A process for the production of rigid heat-resistant products will be disclosed, comprising:
preparing a layer of yarn fabric obtained from textile fibres (natural, synthetic or mixtures thereof), having different colour and/or title and/or wettability, and representing a decorative texture resulting from their interweaving,
coupling this first layer of textile fibre fabric weighing in the range between 150 g/m² and 400 g/m² with a second layer of fibreglass weighing in the range between of 400 g/m² and 1000 g/m², preferably 400 g/m², and with a glass surface layer weighing in the range between 10 g/m² and 150 g/m² and obtaining a deformable composite laminate,
impregnating said composite laminate with a transparent fireproof matrix, preferably a thermosetting epoxy matrix, and
deforming and hardening the laminate in a desired final shape. In the invention, glass surface layer is composed micronized glass powder.

Moreover, in order to increase the fireproof effect of the laminate, it is provided to add micronized glass powder to the matrix.

From the laminate, the process for obtaining rigid fireproof products provides a step of positioning in a press said composite laminate within two opposing matrices, a step of aligning the matrices and deforming said composite laminate, and step of heating said composite laminate at an adjustable temperature until achieving the hardening of the matrix.

Advantageously, thanks to the invention, it is possible to obtain the desired aesthetic final results of the laminates, by a suitable combination of natural and synthetic fibres, selected according to the parameters regulating the wettability of the fibres themselves such as twisting and size.

In greater detail, the process includes the positioning of the laminate within matrices and against matrices to be associated with a press when the matrix has not come to full polymerization, thereby allowing to deform the fabric by exerting a more or less accentuated stress on it.

In an embodiment, the perimeter of the edge of the mould and of the counter-mould is shaped so as to form the reference profile of the contour of the product which will be produced as a result of the deformation induced by the action of the plant press of the deformation surfaces of matrix and counter-matrix.

Such deformation surfaces are oriented substantially opposite to each other and, during mould closure, they are positioned in a complementary manner in order to minimize the reciprocal distance from an orthogonal axis to the main faces corresponding to the direction of movement of the matrices when applied to the press.

The laminate is placed between mould and counter-mould with the normal on the laminate plane which is virtually coincident with the mould closure axis (i.e. the axis of movement of the matrix formed by that body when applied to the press). In this way, the outer surfaces of the laminate have their respective main faces at the opposing faces of the matrices 11 and 12.

Thereby, the approach of the matrix and counter-matrix deforms the fabric that still has the ability to reversibly deform.

The laminate is then heated at a variable temperature depending on the polymerization characteristics of the matrix of which the fabric is impregnated, and kept in contact with the matrices for a time according to the characteristics of the production process. Depending on the type of material to be processed, a special detacher is placed on the moulding surfaces before laminating, to allow an easy extraction without damaging the finished product. At the end of the crosslinking process, or in the case of the thermoplastic matrices once the deformation is achieved, the press opens by reciprocally having the mould and the counter-mould move away from each other to allow the manufactured product to be extracted.

To finish the production, the product often needs further processing such as contour-cut and/or polishing.

It goes without saying that the processing steps now indicated may also be carried out with a different order from the preferred and optimum one described herein. The example described is related to the manufacture in a press, similarly, with the same approach, it is possible to make aesthetic articles with other known technologies in the composite materials sector, for example by means of the vacuum bag technology. Further improvements in the properties of the product to be manufactured are achieved with the use of the vacuum bag technology associated with the autoclave system.

Below are given comparative examples of the laminate construction.

### Comparative Example 1

Laminate composed of:
- a first layer of merely structural fibreglass (400 g/m2),
- a layer of aesthetic fabric
both impregnated with fireproof or "flame retardant" resin.

### Comparative Example 2

Laminate composed
- a layer of fibreglass 400 g/m2,
- an aesthetic fabric,
- a surface layer of fibreglass weighing approximately 25 g/m2 (cover glass), which is again fully impregnated with fireproof or "flame retardant" resin.

Both laminates were subjected to the OSU 65/65 test. The laminate without surface cover glass (Example 1) gave a heat release rate of 83 kW/m2 whereas the one with the cover glass (Example 2) gave 50 kW/m2.

## Claims

1. Process for manufacturing decorative, rigid, heat-resistant products, comprising:
preparing a layer of fabric obtained from textile fibre yarns having different colour and/or titre and/or wettability, representing a decorative texture resulting from their interweaving,
obtaining a deformable composite laminate by coupling the textile fibre fabric layer between a layer of fibreglass weighing in the range between 400 g/m2 and 1000 g/m2, and a surface layer made of micronized glass powder arranged on one side of the laminate,
impregnating said layers and/or said composite laminate with a transparent fireproof matrix, preferably a thermosetting epoxy matrix;
heat-hardening and deforming the laminate in a desired final shape; whereby said layer of textile fibre fabric weighing in the range between 150 g/m2 and 400 g/m2 and said glass surface layer made of a micronized glass powder weighing in the range between 10 g/m2 and 150 g/m2.

2. Process according to claim 1, **characterized in that** said decorative fabric is a fabric obtained from fibres selected among natural fibres, synthetic fibres and mixtures thereof.

3. Process according to any one of the preceding claims, **characterized in that** micronized glass powder was added to said matrix.

4. Process according to any one of claims 1 to 3, **characterized in that** said step of form hardening of the laminate comprises the steps of
positioning in a press said composite laminate within two opposing matrices;
approaching the matrices and deforming said composite laminate;
heating said composite laminate to an adjustable temperature until reaching the hardening of the matrix.

5. Process according to any one of claims 1 to 3, **characterized in that** said step of form hardening of the laminate comprises a deforming step of the laminate in a vacuum bag.

6. Process according to any one of claims 1 to 3, **characterized in that** said step of form hardening of the laminate comprises a deforming step for autoclave moulding.

7. Composite laminated product obtained by a method according to one or more of the preceding claims.

## Patentansprüche

1. Verfahren zur Herstellung dekorativer, starrer, hitzebeständiger Produkte, umfassend:
Herstellen einer Gewebeschicht aus Textilfasergarnen mit unterschiedlicher Farbe und/oder Beschaffenheit und/oder Benetzbarkeit, die aufgrund ihrer Verwebung eine dekorative Textur darstellen,
Erhalten eines verformbaren Verbundlaminats durch das Verbinden der Textilfasergewebeschicht zwischen einer Glasfaserschicht mit einem Gewicht zwischen 400 g/m² und 1.000 g/m² und einer Oberflächenschicht aus mikronisiertem Glaspulver, die auf einer Seite des Laminats angeordnet ist,
Imprägnieren der Schichten und/oder des Verbundlaminats mit einer transparenten feuerfesten Matrix, vorzugsweise einer duroplastischen Epoxidmatrix;
Wärmehärten und Verformen des Laminats in eine gewünschte Endform, wobei die Schicht aus Textilfasergewebe ein Gewicht zwischen 150 g/m² und 400 g/m² aufweist und die aus einem mikronisierten Glaspulver hergestellte Glasoberflächenschicht ein Gewicht zwischen 10 g/m² und 150 g/m² aufweist.

2. Verfahren nach Anspruch 1, **dadurch gekennzeichnet, dass** das dekorative Gewebe ein Gewebe ist, das aus Fasern hergestellt wird, ausgewählt aus Naturfasern, synthetischen Fasern und Mischungen davon.

3. Verfahren nach einem der vorhergehenden Ansprüche, **dadurch gekennzeichnet, dass** mikronisiertes Glaspulver zu der Matrix gegeben wurde.

4. Verfahren nach einem der Ansprüche 1 bis 3, **dadurch gekennzeichnet, dass** der Schritt des Formhärtens des Laminats die folgenden Schritte umfasst:
Positionieren des Verbundlaminats in einer Presse innerhalb zweier gegenüberliegender Matrizen;
Annähern der Matrizen und Verformen des Verbundlaminats;
Erwärmen des Verbundlaminats auf eine einstellbare Temperatur bis die Aushärtung der Matrix erreicht wird.

5. Verfahren nach einem der Ansprüche 1 bis 3, **dadurch gekennzeichnet, dass** der Schritt des Formhärtens des Laminats einen Verformungsschritt des Laminats in einem Vakuumbeutel umfasst.

6. Verfahren nach einem der Ansprüche 1 bis 3, **dadurch gekennzeichnet, dass** der Schritt des Formhärtens des Laminats einen Verformungsschritt zum Autoklavformen umfasst.

7. Laminiertes Verbundprodukt, erhalten durch ein Verfahren nach einem oder mehreren der vorhergehenden Ansprüche.

## Revendications

1. Procédé de fabrication de produits thermorésistants rigides et décoratifs, comprenant :
la préparation d'une couche de tissu obtenu à partir de fils de fibres textiles de couleur et/ou titrage et/ou mouillabilité différents, représentant une texture décorative découlant de leur entrelacement,
l'obtention d'un stratifié composite déformable par le couplage de la couche de tissu de fibres textiles entre une couche de fibres de verre pesant dans la plage entre 400 g/m² et 1000 g/m², et une couche de surface constituée d'une poudre de verre micronésée agencée sur un côté du stratifié,
l'imprégnation desdites couches et/ou dudit stratifié composite avec une matrice ignifuge transparente, de préférence une matrice époxy thermodurcissable ;
le durcissement à la chaleur et la déformation du stratifié dans une forme finale souhaitée ;
de telle manière que ladite couche de tissu de fibres textiles pèse dans la plage entre 150 g/m² et 400 g/m² et ladite couche de surface de verre constituée d'une poudre de verre micronisée pèse dans la plage entre 10 g/m² et 150 g/m².

2. Procédé selon la revendication 1, **caractérisé en ce que** ledit tissu décoratif est un tissu obtenu à partir de fibres sélectionnées parmi des fibres naturelles, des fibres synthétiques et des mélanges de celles-ci.

3. Procédé selon l'une quelconque des revendications précédentes, **caractérisé en ce qu'**une poudre de verre micronisée a été ajoutée à ladite matrice.

4. Procédé selon l'une quelconque des revendications 1 à 3, **caractérisé en ce que** ladite étape de durcissement de forme du stratifié comprend les étapes suivantes :
le positionnement, dans une presse, dudit stratifié composite à l'intérieur de deux matrices opposées ;
l'approche des matrices l'une de l'autre et la déformation dudit stratifié composite ;
le chauffage dudit stratifié composite à une température réglable jusqu'à atteindre le durcissement de la matrice.

5. Procédé selon l'une quelconque des revendications 1 à 3, **caractérisé en ce que** ladite étape de durcissement de forme du stratifié comprend une étape de déformation du stratifié dans un sac sous vide.

6. Procédé selon l'une quelconque des revendications 1 à 3, **caractérisé en ce que** ladite étape de durcissement de forme du stratifié comprend une étape de déformation ou un moulage autoclave.

7. Produit stratifié composite obtenu par un procédé selon une ou plusieurs des revendications précédentes.
